# EUROPÄISCHE PATENTSCHRIFT

(11) **EP 0 761 078 B1**
(45) Veröffentlichungstag und Bekanntmachung des Hinweises auf die Patenterteilung: **20.09.2000**
(21) Anmeldenummer: 96108834.1
(22) Anmeldetag: 01.06.1996
(51) Int. Cl.: A01B 27/00

(54) **Schollenplaniergerät zur Bodenbearbeitung**
Soil working clod crusher drag
Brise-mottes planeur pour le travail du sol

(30) Priorität: 29.07.1995 DE 19527909
(43) Veröffentlichungstag der Anmeldung: 12.03.1997
(73) Patentinhaber: Kerner, Josef, D-89344 Aislingen (DE); Wecker, Andreas, 89344 Aislingen (DE)
(72) Erfinder: Kerner, Josef, D-89344 Aislingen (DE); Wecker, Andreas, 89344 Aislingen (DE)
(74) Vertreter: Gallo, Wolfgang, Dipl.-Ing. (FH)

(56) Entgegenhaltungen:
- EP-A- 0 242 932
- DE-C- 43 314
- DE-C- 152 693
- DE-U- 8 913 717
- DE-U- 29 512 284
- US-A- 1 795 182

## Beschreibung

Die Erfindung betrifft ein Bodenbearbeitungsgerät in Form eines Schollenplaniergeräts zum Einebnen und gleichzeitigen Zerkleinern der Schollen eines grobschollig vorgearbeiteten Bodens, insbesondere zur Vorbereitung des Bodens für die Aussaat.

Derartige Bodenbearbeitungsgeräte sind beispielsweise aus der DE-OS 33 14 761 oder der DE-PS 39 06 503 bekannt. Diese bekannten Bodenbearbeitungsgeräte haben jeweils eine etwa walzenartigen Grundkonstruktion mit einer Mehrzahl von axial nebeneinander und mit kleinen gegenseitigen Abständen auf einer Achse angeordneten scheibenartigen Walzensegmenten, zwischen denen in den Boden eingreifende Zinken angeordnet sind.

Bei dem aus der DE-OS 33 14 761 bekannten Bodenbearbeitungsgerät sind die einzelnen Walzensegmente als Schaufelräder mit am Umfang angeordneten, schrägen radialen Schaufelblättern ausgebildet, und im Bereich jedes Zwischenraums zwischen benachbarten Walzensegmenten sind zwei Zinken angeordnet, von denen eine Zinke in Arbeitsrichtung vorne an der Walzenanordnung vertikal nach unten ragt und der andere Zinken schräg rückwärts und abwärts verläuft und, bezogen auf die Arbeitsrichtung, hinterhalb der Walzensegmente leicht bogenförmig zum Boden hin endigen.

Bei dem aus der DE-PS 39 06 503 bekannten Bodenbearbeitungsgerät sind die Walzensegmente jeweils sternartig ausgebildet, und in jedem Zwischenraum zwischen benachbarten Walzensegmenten verläuft hinterhalb der Achse, also in dem in Arbeitsrichtung hinteren Walzenbereich, ein Zinken nach unten, der eine etwa sichelartige, in Arbeitsrichtung vorgewölbte und am unteren Ende zurückgebogen auslaufende Bogenform hat.

Da die Arbeitsergebnisse der bekannten Bodenbearbeitungsgeräte noch nicht voll befriedigen können, liegt der Erfindung die Aufgabe zugrunde, ein Bodenbearbeitungsgerät dieser Gattung, also mit einem in axial benachbarte und mit Zwischenräumen angeordnete Walzensegmente gegliederten Walzenkörper und in den Zwischenräumen zwischen den Walzensegmenten verlaufenden zinkenartigen Elementen, zu schaffen, das noch bessere Arbeitsergebnisse im Hinblick auf feinkrümmelig zerkleinerte und sauber eingeebnete Schollen ergibt.

Diese Aufgabe wird gemäß der Erfindung durch das im Anspruch 1 angegebene und gemäß den Unteransprüchen vorteilhaft weiter ausgestaltete Schollenplaniergerät gelöst.

Besonders wesentlich bei dem erfindungsgemäßen Schollenplaniergerät ist die Anordnung der Zinkenelemente unter einem sehr flachen Arbeitswinkel sowie das deutlich hinterhalb der Walzenachse liegende Ende der Zinken. Dadurch werden die Schollen wirksam zerkleinert und eine Tiefenlockerung des Bodens erreicht. Außerdem wird verhindert, daß sich grobe Schollen, Ernterückstände wie beispielsweise Stroh und Pflanzenteile vor dem Walzenkörper stauen und anhäufen und das Gerät verstopfen. Außerdem wirken die Zinken als Abstreifer zwischen den Walzensegmenten. Die Ausbildung der Zinken kann auf die Bodenqualität abgestimmt sein.

Das pfeilförmige Querschnittsprofil des Walzensegmentumfangs fördert das feinkrümmelige Zerdrücken und Zerkleinern und das Einebnen der Schollen.

Die Zinken sind vorzugsweise mit ihren vorderen Enden an einer Befestigungsschiene gehaltert, die zugleich als Planierschild ausgebildet ist und das Einebnen des Bodens unterstützt. Dieser Planierschild kann relativ zur Walzenachse höhenverstellt werden, wobei die Anordnung so getroffen ist, daß die Höhenverstellung des Planierschilds die Arbeitstiefe der Zinken unverändert läßt. Die Zinken, falls sie als Messerzinken ausgebildet sind, sind ihrerseits zum Regulieren der Tiefelockerung verstellbar.

Der Haltemechanismus für die Messerzinken weist vorzugsweise einen mit relativ großer Federhärte gefedert abgestützten Rahmen auf, der eine im wesentlichen starre Anordnung der Messerzinken bedingt, aber trotzdem deren Ausweichen ermöglicht, wenn sie auf harte Fremdkörper wie Steine oder dgl. stoßen.

Verschlissene Messerzinken bzw. Zinken können umgedreht werden und sind, falls ein Austausch notwendig wird, leicht aus der Halterung herausziehbar.

Schließlich zeichnet sich das erfindungsgemäße Gerät durch eine kurze Bauform aus, weil die Zinken zwischen den Walzensegmenten angeordnet sind. Da die Zinken bzw. Messerzinken als ziehende Werkzeuge gestaltet sind, kann das erfindungsgemäße Gerät aufgrund der Kombination von rollenden Elementen (Walzensegmente) und ziehenden Elementen (Messerzinken) eine leichte Bauart haben, denn ziehende Werkzeuge haben weniger Auftrieb als rollende Werkzeuge.

Die mögliche leichte Bauart des erfindungsgemäßen Geräts ermöglicht den Einsatz als Grubber-Nachläufer. Es ist aber auch eine Verwendung als Frontpacker möglich, wobei Zusatzgewichte und zusätzliche Zinkenreihen angebracht werden können.

Durch die besondere Anordnung der Zinken und die leichte Bauart des Geräts, nämlich auch durch Ausbildung der Walzensegmente als Walzenringe, die nur über radiale Speichen mit der Achse verbunden sind, kann das erfindungsgemäße Gerät bei verschiedenen Bodenbearbeitungsarten und Gerätekombinationen zur Anwendung kommen.

Ein Ausführungsbeispiel der Erfindung wird nachstehend unter Bezugnahme auf die anliegenden Zeichnungen mehr im einzelnen beschrieben, in denen zeigt:
- Fig. 1: eine schematische Seitenansicht des erfindungsgemäßen Geräts,
- Fig. 2: eine schematische Frontansicht eines kurzen axialen Abschnitts des erfindungsgemäßen Geräts,
- Fig. 3: eine abgewandelte Ausführungsform des Geräts nach den Fig. 1 und 2 mit zusätzlichen Abstreifern,
- Fig. 4: eine andere Ausführungsform des erfindungsgemäßen Geräts mit flachen federartigen Zinken, und

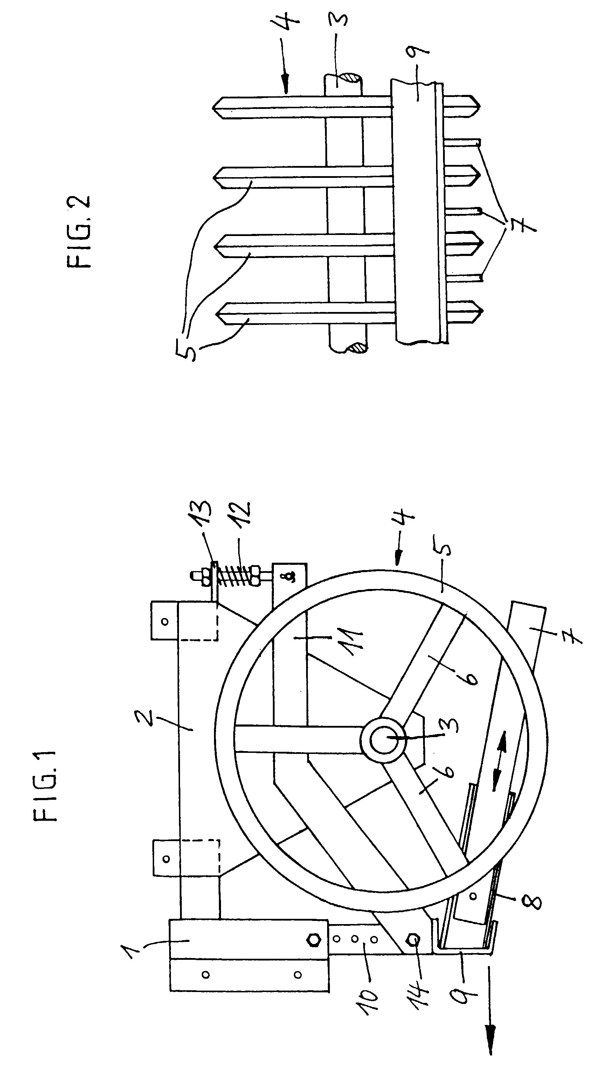

Zunächst wird nun die in den Fig. 1 und 2 dargestellte Ausführung des erfindungsgemäßen Geräts in seinen Einzelheiten erläutert.

Das in den Zeichnungen schematisch dargestellte Schollenplaniergerät weist einen Rahmen 1 mit Rahmenteilen 2 zur Lagerung einer Walzenachse 3 auf, auf welcher, wie der Ausschnitt nach Fig. 2 zeigt, axial nebeneinander und mit gegenseitigen axialen Abständen Walzensegmente 4 angeordnet sind. Jedes Walzensegment besteht aus einem äußeren Walzenring 5, der über eine Anzahl radialer Speichen 6 mit einer Nabe verbunden ist. Jeder Walzenring hat ein radial auswärts weisenden pfeilförmiges Querschnittsprofil.

In jedem Zwischenraum zwischen zwei benachbarten Walzensegmenten 4 ist, wie in den Fig. 1 und 2 sichtbar, eine Messerzinke 7 angeordnet. Diese sind mit ihren vorderen Enden in einer Halterung 8 gehaltert und verlaufen unter flachem Winkel (10 bis 20°) schräg nach hinten abwärts. Das hintere Ende der Messerzinken liegt deutlich hinterhalb der Walzenachse 3; das vordere Ende bzw. die Halterung 8 liegt im Bereich in Arbeitsrichtung (in Fig. 1 durch einen Pfeil angegeben) vorderhalb der Walzensegmente 4 oder jedenfalls in deren vorderstem Bereich.

Die Halterung der Messerzinken 7 in der jeweiligen Halterung 8 kann so ausgebildet sein, daß zum einen die Messerzinken in der Halterung 8, wie in Fig. 1 durch einen in die gezeigte Messerzinke hineingezeichneten Doppelpfeil angedeutet ist, in Vorwärts-Rückwärtsrichtung verstellbar fixiert werden, um damit auch die Tiefe des hinteren Endes der Messerzinken 7, bezogen auf die Walzenachse 3, und damit die Tiefenwirkung der Messerzinken in Anpassung an die jeweiligen Bodenverhältnisse verstellen zu können. Zum anderen ist die Aufnahme der Messerzinken in der Halterung 8 so ausgebildet, daß die Messerzinken nach Verschleiß der einen, im Gebrauch unten liegenden Messerkante umgedreht werden können, so daß die vorher oben liegende, noch nicht verschlissene Messerkante nun unten zu liegen kommt.

Die Halterungen 8 der Messerzinken 7 sind an einer vorderen Halteschiene 9 angebracht, deren Unterkante wegen des flachen Verlaufs der Messerzinken 7 in nur verhältnismäßig geringer Höhe oberhalb des unteren Umfangsbereichs der Walzensegmente 4 liegt. Die Halteschiene 7 bildet damit zugleich einen Planierschild, die großschollige oder gehäufelte Bodenbereiche vorderhalb des Geräts zumindest grob einebnet.

Die als Planierschild ausgebildete Halteschiene 9 ist, wie in Fig. 1 dargestellt, über nach oben verlaufende Streben 10 mit dem Rahmen 1 verbunden, und zwar, wie auch aus der Zeichnung ersichtlich, vorzugsweise höhenverstellbar.

Vorzugsweise ist mit der starr mit den Halterungen 8 der Messerzinken 7 verbundenen Halteschiene 9 auch ein oberhalb der Walzenachse 3 nach oben und hinten verlaufender Arm 11 (bzw. mehrere solche Arme) starr verbunden, dessen hinteres Ende über eine ziemlich harte Druckfeder 12 an einem rahmenseitigen Anschlag 13 abgestützt ist. Dabei ist die aus Halteschiene 9 mit den Halterungen 8 und dem bzw. jedem Arm 11 gebildete Anordnung mittels eines Drehgelenks 14 mit der bzw. jeder Strebe 10 verbunden.

Damit wird erreicht, daß wegen der harten Feder 12 die Anordnung der Messerzinken 7 am Rahmen 1 zwar im wesentlichen starr ist, aber bei harten Fremdkörpern oder Steinen im Boden doch entgegen der Feder 11 nachgeben kann, indem dann die aus den Messerzinken 7, der Halteschiene 9 und dem Arm 11 gebildete Anordnung insgesamt etwas schwenkend auslenken kann. Es versteht sich von selbst, daß bei größerer Walzenbreite die Anordnung axial so segmentiert sein kann, daß jeweils eine Gruppe von Messerzinken 7 über einen entsprechenden gesonderten Abschnitt der Halteschiene über einen Arm 11 und eine Strebe 10 bzw. ein paar Arme und Streben am Rahmen hart federnd abgestützt sein kann.

Die eben beschriebene Anordnung ermöglicht es des weiteren, daß die Höhe der als Planierschild ausgebildeten Halteschiene 9 über dem unteren Umfangsbereich der Walzensegmente 4 durch Verstellen der Streben 10 einstellbar ist, ohne daß dadurch die Höhenposition der hinteren Enden der Messerzinken 7 verändert wird. Denn bei der dargestellten Geometrie bewirkt eine Höhenverstellung der Halteschiene 9 aufgrund der Tatsache, daß das hintere Ende des Arms 11 durch die harte Feder 12 in unveränderter Höhenposition gehalten wird, ein Schwenken der aus dem Arm 11, der Halteschiene 9 und den Messerzinken 7 gebildeten, in sich starren Anordnung um das Drehgelenk 14, so daß dann bei einer Höhenverstellung der als Planierschild dienenden Halteschiene 9 und somit auch des Drehgelenks 14 im wesentlichen nur eine gewisse Veränderung des Neigungswinkels der Messerzinken 7 bei im wesentlichen unveränderter Höhenlage der hinteren Messerzinkenenden herbeigeführt wird.

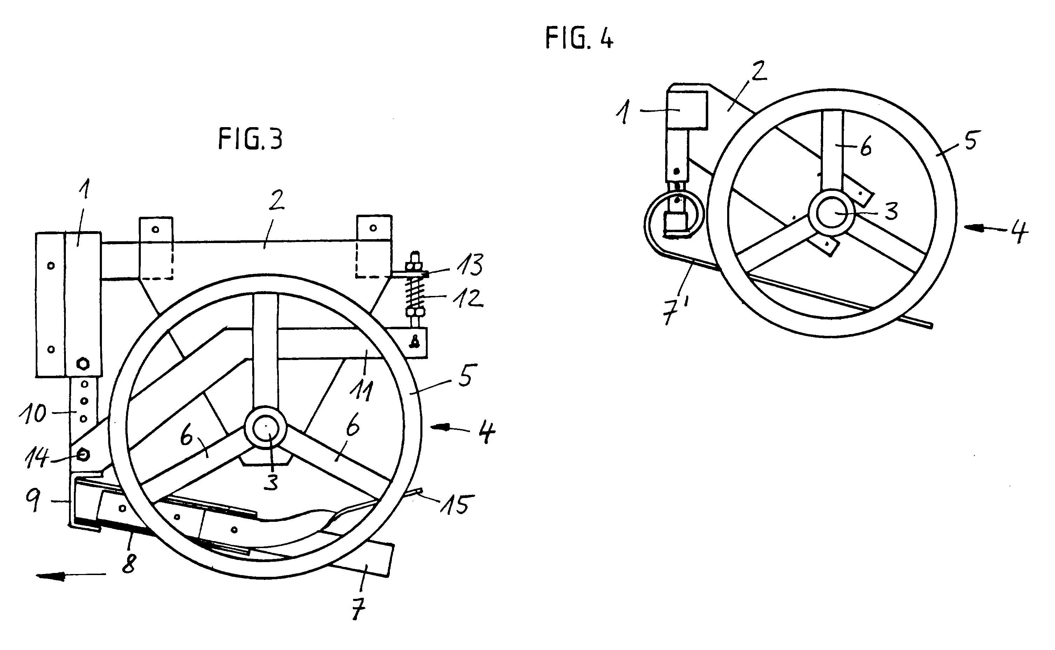

In Fig. 3 ist eine Abwandlung der in den Fig. 1 und 2 dargestellten Ausführungsform des erfindungsgemäßen Geräts dargestellt. Diese Ausführung unterscheidet sich von der eben beschriebenen Ausführung dadurch, daß außer den Messerzinken 7 auch noch Abstreifer 15 vorgesehen sind. An jeder Messerzinkenhalterung 8 ist außer dem jeweiligen Messerzinken 7 ein solcher Abstreifer 15 angeordnet, der, wie aus Fig. 3 ersichtlich ist, aus einem Flachstahl oder dgl. hergestellt ist und hinterhalb der Halterung 8 etwas nach oben und in Querlage des Flachprofils gebogen ist, so daß der Abstreifer an den Walzenringen 5 anhaftende Erde abstreift. Dies ist besonders bei lehmigen Böden und großer Bodenfeuchte wichtig.

Die Anordnung der Abstreifer 15 ermöglicht also den Einsatz der Walze bei nahezu allen Witterungsverhältnissen und verhindert bei feuchtem lehmigem Boden oder dgl. eine übermäßige Verschmutzung des Geräts und ein Verstopfen der Walzenzwischenräume durch anhaftenden Boden, was den Arbeitserfolg sehr beeinträchtigen würde. Diese Ausführungsform ist auch sehr vorteilhaft beim Einsetzen der Walze als Nachläufer an Kreiseleggen, Zinkenrotoren und ähnlichen Geräten, die erfahrungsgemäß auch bei feuchter Herbstwitterung funktionieren müssen.

Fig. 4 zeigt eine andere Ausführungsform des erfindungsgemäßen Geräts, wobei auch der Rahmen 1 mit den Rahmenteilen 2 zur Lagerung der Walzenachse 3 lediglich beispielshalber in einer anderen möglichen Konfiguration dargestellt ist. Die Walze als solche ist wie bei den vorbeschriebenen Ausführungsformen mit Walzensegmenten 4 ausgebildet, die jeweils aus einem äußeren Walzenring 5 und diesen mit der Nabe 3 verbindenden Speichen 6 bestehen.

Die Ausführungsform nach Fig. 4 unterscheidet sich von den Ausführungsformen nach den Fig. 1 bis 3 hauptsächlich durch die andere Ausbildung der Zinken 7'. Diese sind nicht als Messerzinken, sondern als flache Federzinken ausgebildet. Diese Ausführungsform stellt eine einfachere Ausführungsvariante dar, die besonders bei leichten Böden, also bei sandigen, krümmeligen und nicht zum Zusammenbacken neigenden Böden eine zweckmäßige Alternative zu den Ausführungsformen nach den Fig. 1 bis 3 darstellt. Auch hier ist ein Einsatz bei feuchtem Boden bzw. bei feuchter Witterung ohne weiteres möglich, weil die flachen Federzinken 7' zugleich auch als Abstreifer wirken, obwohl dieser Funktion natürlich bei leichten Böden nicht die Bedeutung beikommt wie beim Einsatz auf schweren klebrigen Böden.

Es versteht sich von selbst, daß die Zinken außer in der konkreten dargestellten Weise auch noch andere zweckmäßige, an Einsatzzweck und Bodenart angepaßte Formen haben können. Beispielsweise können messerartige Zinken seitwärts etwas abgebogen endigen oder wellenartig gebogen sein, um die Zerkrümmelungswirkung zu fördern und auch eine flächigere Zerkleinerungs- bzw. Einebnungsfunktion zu erfüllen, oder flache Zinken nach Art der Zinken 7' in Fig. 4 können auch ein gewölbtes, bogenförmiges Profil haben. Die Aufgabe der Zinken besteht bei allen Ausführungsformen darin, die Schollen zwischen den Walzensegmenten nochmals zu zerkleinern und eine Tiefenlockerung des Bodens zu erreichen.

Abweichend von den dargestellten Ausführungsformen ist es auch möglich, die Walzenringe statt mit einem pfeilförmigen Profil mit einem Profil in Form eines ringförmigen, hochkant stehenden Stegs auszubilden, um dadurch eine größere Eindringtiefe in den Boden zu erreichen.

Weiter kann es vorteilhaft sein, bei einer Walze.mit einer Vielzahl von Walzensegmenten diejenigen Walzensegmente, die im Bereich der Schlepperräder sind, im Durchmesser kleiner zu machen (mit tieferliegender Achse), um die Walze näher am Schlepper montieren zu können.

## Patentansprüche

1. Als Schollenplanier- und -zerkleinerungsgerät dienendes Bodenbearbeitungsgerät mit einem Rahmen (1, 2), einer Mehrzahl von um eine horizontale Achse (3) drehbaren, mit gegenseitigen Abständen axial nebeneinander angeordneten Walzensegmenten (4) und in den Zwischenräumen zwischen den benachbarten Walzensegmenten am Rahmen angeordneten, zum Boden verlaufenden Zinken (7),
dadurch gekennzeichnet,
daß die Zinken mit ihren vorderen Enden in einer vorderhalb oder im vordersten Bereich der Walzensegmente liegenden Halterung (8) gehaltert sind und unter flachem Anstellwinkel, bezogen auf die Arbeitsrichtung des Geräts, schräg rückwärts abfallend angeordnet sind und ihre hinteren Enden zur Tiefenlockerung des Bodens deutlich hinterhalb der Drehachse (3) der Walzensegmente (4) liegen.

2. Gerät nach Anspruch 1, dadurch gekennzeichnet, daß die Zinken (7) als ein- oder beidseitig mit Arbeitskanten versehene Messer ausgebildet sind.

3. Gerät nach Anspruch 1, dadurch gekennzeichnet, daß die Zinken (7') als flache Federzinken ausgebildet sind.

4. Gerät nach einem der Ansprüche 1 bis 3, dadurch gekennzeichnet, daß die vorderen Enden der Zinken (7) mit einer als Planierschild ausgebildeten, starr oder höhenverstellbar am Rahmen (1) gehalterten Halteschiene (9) verbunden sind.

5. Gerät nach einem der Ansprüche 1 bis 4, dadurch gekennzeichnet, daß die vorderen Enden der Zinken (7) nach rückwärts herausziehbar in Zinkenaufnahmen (8) gehaltert sind.

6. Gerät nach einem der Ansprüche 1 bis 5, dadurch gekennzeichnet, daß die Zinken (7) im wesentlichen starr, jedoch bei Einwirken einer z.B. durch Berührung mit Steinen verursachten starken Kraft ausschwenkbar am Rahmen gehaltert sind.

7. Gerät nach einem der Ansprüche 1 bis 5, dadurch gekennzeichnet, daß die gegebenenfalls mit einer als Planierschild ausgebildeten Halteschiene (9) verbundenen Halterungen bzw. Aufnahmen (8) für die Zinken (7) mindestens einer Gruppe von axial benachbarten Zinken mit einem rückwärts und nach oben verlaufenden Arm (11) verbunden sind, dessen hinteres Ende über eine harte Feder (129 an einem rahmenseitigen Anschlag (13) abgestützt ist und dessen vorderer Endbereich gelenkig mit dem Rahmen (1) verbunden ist.

8. Gerät nach einem der Ansprüche 1 bis 7, dadurch gekennzeichnet, daß zwischen den benachbarten Walzensegmenten (4) jeweils ein im hinteren unteren Walzenbereich angeordneter Abstreifer (15) vorgesehen ist, der zusammen mit dem jeweiligen Zinken (7) an dessen Halterung oder Aufnahme (8) oder separat am Rahmen (1, 2) gehaltert ist.

9. Gerät nach einem der Ansprüche 1 bis 8, dadurch gekennzeichnet, daß jedes Walzensegment (4) an seinem Umfang ein radial auswärts weisendes pfeilförmig zugespitztes oder als stehender Steg ausgebildetes Querschnittsprofil hat.

## Claims

1. Agricultural implement serving as a levelling and crushing device with a frame (1, 2), a multiplicity of roller segments (4) rotatably arranged about a horizontal axle (3) and axially adjacent with spacing, and tines (7) arranged on the frame in the gaps between adjacent roller segments and running to the ground,
characterised in that
the tines are held by their front ends in a holder (8) lying in front of or in the foremost area of the roller segments and are arranged at a flat angle of attack, falling away obliquely backwards in relation to the working direction of the device, and their rear ends lie clearly behind the axis of rotation (3) of the roller segments (4) for loosening the subsoil.

2. Device according to claim 1, characterised in that the tines (7) are formed as cutters with working edges on one or both sides.

3. Device according to claim 1, characterised in that the tines (7') are formed as flat spring tines.

4. Device according to any of claims 1 to 3, characterised in that the front ends of the tines (7) are connected to a holder bar (9) designed as a levelling scoop and connected rigidly or height adjustable on the frame (1).

5. Device according to any of claims 1 to 4, characterised in that the front ends of the tines (7) are held in tine holders (8) retractable towards the back.

6. Device according to any of claims 1 to 5, characterised in that the tines are held substantially rigid on the frame but can swivel out under the effect of a strong force caused for example by contact with stones.

7. Device according to any of claims 1 to 5, characterised in that the holders or supports (8), connected where applicable with a holder bar (9) designed as a levelling scoop, for the tines (7) of at least one group of axially adjacent tines, are connected with an arm (11) running backwards and upwards, the rear end of which is supported by way of a stiff spring (12) on a stop (13) on the frame and the front end area of which is connected articulated with the frame (1).

8. Device according to any of claims 1 to 7, characterised in that between the adjacent roller segments (4), arranged in the rear lower roller area, is provided a scraper (15) which is held together with the tine (7) concerned on its holder or support (8) or separately on the frame (1, 2).

9. Device according to any of claims 1 to 8, characterised in that each roller segment (4) has on its periphery a cross-section profile formed as an arrow shape pointing radially outwards, or as a projecting ridge.

## Revendications

1. Appareil de travail du sol servant de brise-mottes - planeur et d'émietteur - planeur, comprenant un châssis (1, 2), plusieurs sections de cylindres (4) qui sont montées tournantes sur un axe (3) horizontal et sont disposées les unes à côté des autres en étant mutuellement espacées, ainsi que des dents (7) qui sont disposées sur le châssis dans les espaces entre des sections de cylindre voisines et sont dirigées vers le sol, caractérisé par le fait que les dents sont fixées par leur extrémité avant à un support (8) disposé en avant des ou dans la région antérieure des sections de cylindre, s'étendent en direction de l'arrière, vers le bas, avec un angle d'attaque plat, rapporté à la direction de travail de l'appareil, et que leurs extrémités arrières, aux fins d'aérer le sol en profondeur, sont situées nettement en arrière de l'axe de rotation (3) des sections de cylindre (4).

2. Appareil selon la revendication 1, caractérisé par le fait que les dents (7) sont conformées en couteaux à une ou à deux arêtes de travail.

3. Appareil selon la revendication 1, caractérisé par le fait que les dents (7') sont conformées en dents élastiques plates.

4. Appareil selon une des revendications 1 à 3, caractérisé par le fait que les extrémités antérieures des dents (7) sont liées à une rail-support (9), conformé en tablier-planeur, qui est monté rigide ou réglable en hauteur sur le châssis (1).

5. Appareil selon une des revendications 1 à 4, caractérisé par le fait que les extrémités antérieures des dents (7) sont fixées dans des logements de dents (8) avec possibilité d'extraction par l'arrière.

6. Appareil selon une des revendications 1 à 5, caractérisé par le fait que les dents (7) sont fixées essentiellement rigidement au châssis, mais avec possibilité de pivotement sous l'action d'une force élevée, par exemple due à un contact avec des pierres.

7. Appareil selon une des revendications 1 à 5, caractérisé par le fait que les fixations ou les logements (8) pour les dents (7) liées au rail-support (9), le cas échéant conformé en tablier-planeur, appartenant à au moins un groupe de dents voisines dans la direction axiale, sont liées à un bras (11) qui s'étend vers l'arrière et vers le haut, dont l'extrémité arrière prend appui sur une butée (13) côté châssis par l'intermédiaire d'un ressort (12) ferme et dont l'extrémité avant est liée de manière articulée audit châssis (1).

8. Appareil selon une des revendications 1 à 7, caractérisé par le fait qu'il est prévu entre les sections de cylindre (4) voisines une râcle (15) qui est disposée dans la région arrière inférieure du cylindre et qui est fixée avec la dent (7) concernée au support ou dans le logement (8) de celle-ci ou est fixée séparément au châssis (1, 2).

9. Appareil selon une des revendications 1 à 8, caractérisé par le fait que chaque section de cylindre (4) présente sur sa périphérie un profil en section transversale en forme de flèche dirigée vers l'extérieur ou de nervure droite.
